# EUROPÄISCHE PATENTSCHRIFT

(11) **EP 1 016 587 B1**
(45) Veröffentlichungstag und Bekanntmachung des Hinweises auf die Patenterteilung: **16.04.2003**
(21) Anmeldenummer: 99123318.0
(22) Anmeldetag: 23.11.1999
(51) Int. Cl.: B62H 3/00, B62H 3/10

(54) **Fahrradstützvorrichtung eines Fahrradständers**
Cycle display stand
Support-présentoir pour bicyclettes

(30) Priorität: 28.12.1998 DE 19860380
(43) Veröffentlichungstag der Anmeldung: 05.07.2000
(73) Patentinhaber: Julius Birkhold GmbH, 89555 Steinheim (DE)
(72) Erfinder: Birkhold, Julius, 89555 Steinheim (DE)
(74) Vertreter: Vetter, Ewald Otto

(56) Entgegenhaltungen:
- EP-A- 0 625 409
- DE-A- 3 822 455
- FR-A- 583 840
- FR-A- 2 650 549
- US-A- 5 346 238

## Beschreibung

Die Erfindung betrifft eine Fahrradstützvorrichtung eines Fahrradständers gemäß dem Oberbegriff von Anspruch 1.

Aus der EP 625 409 A1 ist ein Fahrrad-Reparaturständer bekannt, welcher zwei mit Abstand voneinander angeordnete Auflagen in Form von halbkreisförmigen Kerben aufweist. Die beiden Auflagen sind von einem U-förmigen Elemtent gebildet und zur Abstützung des Fahrrades im Bereich seines Tretlagers vorgesehen.

Aus der DE-C-38 22 455 ist eine Fahradstützvorrichtung eines Fahrradständers bekannt, welcher eine oben offene U-Schiene, in welche die Räder eines Fahrrades gestellt werden können, und eine vertikal von ihr nach oben ragende Teleskopstütze auf weist. Die Teleskopstütze ist durch das Gewicht des Fahrrades entgegen der Kraft einer in der Teleskopetütze untergebrachten Feder vertikal zusammenschiebbar und hat an ihrem oberen Ende einen Kegel mit nach oben ragender Kegelspitze, die hinter dem Fahrrad-Tretlager in eine Ausnehmung des Fahrradrahmens eingreifen kann. Der aus Gummi bestehende Kegel stützt das Fahrrad nahe seines Schwerpunktes ab, so daß es nicht aus der Schiene herauskippen kann. Der Kegel dient somit als Adapter, durch welchen die Teleskopstütze an das Fahrrad adaptiert wird. Statt eines Kegels ist auch die Verwendung eines rechtwinklig abgebogenen Blechstückes als Adapter bekannt, dessen vertikaler Schenkel eine Ausnehmung zwischen zwei nach oben ragende Gabelzinken aufweist, in welcher die Tretlagerachse abstützbar ist. Der horizontale andere Schenkel des aus Blech gebogenen Adapters hat einen nach unten ragenden; angeschweißten Zapfen, welcher in das obere Ende des als Vierkantrohr ausgebildeten oberen Teleskoprohres eingesetzt ist und darin durch einen Stift gesichert ist, welcher quer durch das obere Teleskoprohr und tangential durch eine Umfangsnut des Zapfens sich erstreckt. Diese Ausführungsform kann für alle Fahrräder verwendet werden, ist jedoch insbesondere für solche Fahrräder gedacht, deren Rahmen keine Ausnehmung hinter dem Tretlager zur Aufnahme eines Kegels hat. Der aus gebogenem Blech gebildete gabelförmige Adapter hat den Nachteil, daß er trotz einer seitlich abgebogenen Versteifungsrippe sehr schwach ist und durch Druck von dem Fahrrad leicht verbiegbar ist. Eine Versteifung durch eingeschweißte Verstärkungsrippen wäre teuer und die Rippen würden bei vielen Fahrrädern eine Verwendung des Adapters nicht zulassen. Die Verwendung eines dickeren Metallbleches hätte den Nachteil, daß der Adapter schwer wird und bei vielen Fahrrädern nicht mehr durch den engen Abstand zwischen dem Tretlagergehäuse und der Tretkurbel hindurchpassen würde und dadurch nicht mehr auf die Tretlagerachse aufseztbar wäre. Ein zu schwerer Adapter würde den Federgegendruck der federelastischen Teleskopstütze minimieren, der das Kippmoment des Fahrrades aufnehmen muß. Dies bedeutet, daß die Federdruckabstimmung für die Fahrräder negativ beeinflußt würde. Außerdem könnte aus dem gleichen Grund ein zu schwerer Blech-Adapter nicht gegen einen der genannten Kegel alternativ ausgetauscht werden. Das Tretlagergehäuse und die Tretkurbel sollen den Adapter auf der Tretlagerachse axial positionieren, damit das Fahrrad nicht seitlich wegkippen kann. Ein Präsentationsständer kann mit einer großen Vielzahl von Fahrradhaltern dieser Art versehen werden, entweder auf einer oder auf mehreren Etagen.

Durch die Erfindung soll die Aufgabe gelöst werden, den gabelförmigen Adapter derart auszubilden, daß er stabiler ist, d.h. größeren Fahrradkräften widerstehen kann, jedoch ohne nachteilig schwer zu sein und ohne den Gabel-Teil des Adapters so dick machen zu müssen, daß er nicht mehr in enge Zwischenräume zwischen Tretlagergehäuse und Tretkurbel eingreifen kann.

Diese Aufgabe wird gemäß der Erfindung durch die kennzeichnenden Merkmale von Anspruch 1 gelöst.

Weitere Merkmale der Erfindung sind in den Unteransprüchen enthalten.

Die. Erfindung wird im folgenden mit Bezug auf die Zeichnungen anhand von bevorzugten Ausführungsformen als Beispiele beschrieben. In den Zeichnungen zeigen
- Fig. 1: schematisch und unmaßstäblich eine bevorzugte Ausführungsform einer Fahrradstützvorrichtung eines Fahrradständers nach der Erfindung bei der Abstützung einer Tretlagerachse,
- Fig. 2: eine vertikale Schnittansicht eines gabelförmigen Adapters von Fig. 1 längs der Ebene II-II von Fig. 3 gesehen in realer Größe,
- Fig. 3: eine Ansicht von links auf den Adapter von Fig. 2,
- Fig. 4: eine Draufsicht auf den Adapter von Fig. 2,
- Fig. 5: einen Vertikalschnitt längs der Ebene V-V von Fig. 6 einer weiteren Ausführungsform eines gabelförmigen Adapters gemäß der Erfindung,
- Fig. 6: eine Ansicht von links des Adapters von Fig. 5,-und
- Fig. 7: eine Draufsicht auf den Adapter von Fig. 5.

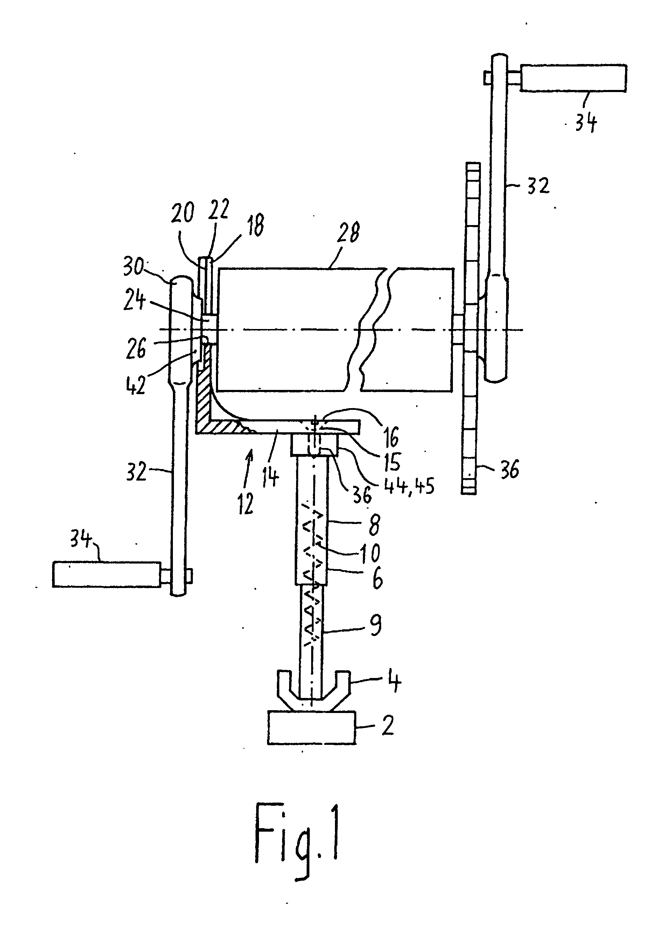

Der in Fig. 1 dargestellte Fahrradständer hat einen nur schematisch dargestellten Träger 2, was ein auf einem Boden stehender Fuß oder ein Rohr sein kann, auf welchem eine nach oben offene Schiene 4 für ein Fahrrad oder eine Vielzahl von solchen Schienen 4 für eine Vielzahl von Fahrrädern befestigt sein kann. Die Schiene 4 kann ein U-Profil aus Metall oder einem anderen Material oder eine anders geformte Schiene sein, welche seitliche Schenkel hat, zwischen welche die Räder eines Fahrrades gestellt werden können. Von der Schiene 4 ragt eine an ihr und/oder am Träger 2 befestigte Teleskopstütze 6 nach oben, welche zwei vertikal ineinander gesteckte Rohre 8 und 9 aufweist, die durch mindestens eine in ihnen angeordnete Feder 10 vertikal auseinander gespannt sind und durch das Gewicht eines Fahrrades entgegen der Kraft der Feder 10 soweit zusammendrückbar sind, daß die Räder des Fahrrades auf der Schiene 4 zum Stehen kommen. Hierfür ist am oberen Ende des oberen Teleskoprohres 8 ein Adapter 12 befestigt.

Der Adapter 12 ist ein einstückiger Materialkörper aus mit Fasern verstärktem Kunststoff, vorzugsweise aus mit Glasfasern verstärktem Polyamid. Er hat einen horizontalen Schenkel 14, dessen Schenkelende am oberen Ende des oberen Teleskoprohres 8 besfestigt ist, beispielsweise durch eine von oben in eine Durchgangsöffnung 15 dieses Schenkels 14 eingesetzte Schraube 16 angeschraubt ist. Der Adapter 12 hat ferner einen vertikalen Schenkel 18 mit einem nach oben offenen Ausschnitt 20 zwischen zwei nach oben ragenden gabelartigen Zinken 22 zur Aufnahme und Abstützung einer Tretlagerachse 24. Die Tretlagerachse 24 sitzt auf dem Gabel-Grund 26 des Ausschnittes 20 auf und schiebt die Teleskopstütze 6 entgegen der Kraft der Feder 10 beim Aufsetzen des Fahrrades auf die Schiene 4 vertikal zusammen. Die Zinken 22 sind so dünn, daß sie in den engen Abstand zwischen einem Tretlagergehäuse 28 und einem Kurbelauge 30 einer Tretkurbel 32 hineinragen können, welche in bekannter Weise ein Pedal 34 hat. Der Adapter 12 befindet sich auf der von einem Ketten-Zahnrad 36 der Tretlagerachse 24 abgewandten Seite des Tretlagergehäuses 28.

Der Ausschnitt 20 zwischen den Zinken 22 hat vorzugsweise einen weiten oberen Bereich 37 und einen relativ dazu engeren unteren Bereich 39, die je nach unten hin halbkreisförmig enger werden. Um den Innenumfang der Zinken 22 und den Grund 26 erstreckt sich auf der vom Tretlagergehäuse 28 weg nach außen zeigenden Seite des vertikalen Schenkels 18 ein vertiefter Schenkelbereich 38, welcher sich bis zum Innenumfangsrand erstreckt und in welchen ein, z.B. im Durchmesser konkav verjüngter, seitlicher Teil 42 des Kurbelauges 30 hineinragen kann, wenn der Zwischenraum zwischen dem Kurbelauge 30 und dem Tretlagergehäuse 28 sehr klein ist. Die Haltefunktion ist auch für solche Fälle noch gewährleistet, wenn der verbleibende Abstand zwischen Tretkurbel und Tretlagergehäuse nur noch zehntel Millimeter beträgt. Der seitliche Rand des oberen weiteren Bereiches 37 sitzt auf dem konkav verjüngten Teil 42 des Kurbelauges 30 auf, wenn der Zwischenraum zwischen Kurbelauge 30 und Tretlagergehäuse 28 kleiner ist als die Dicke der GabelZinken 22.

Ein Zapfen oder gemäß den Zeichnungen ein Rohrstutzen 44 ragt von dem horizontalen Schenkel 14 an dessen vom vertikalen Schenkel 18 entfernten Endabschnitt nach unten und besteht zusammen mit dem Adapter 12 aus einem einstückigen Teil. Das obere Ende des oberen Teleskoprohres 8 ist auf den Rohrstutzen 44 aufgesteckt und ist von einem in sich geschlossenen Rippenzug 45 des Adapters 12 umschlossen. Der Rippenzug 45 besteht zusammen mit dem Adapter 12 aus einem einstückigen Kunststoffteil und wird von dem Teleskoprohr 8 stabilisiert. Die Querschnitte des Rohrstutzens 44 und des Rippenzuges 45 sind dem Querschnitt des Teleskoprohres 8 angepaßt und halten zwischen sich das Teleskoprohr 8 wackelfrei. Der Querschnitt kann kreisrund oder eckig, z.B. vorzugsweise quadratisch entsprechend der gezeigten Ausführungsform sein. Ein Kegel oder Keil 48 ist in einen nach unten offenen Kanal 46 des Rohrstutzens 44 eingesetzt und spannt die Wand des Rohrstutzens 44 gegen das Teleskoprohr 8 quer nach außen durch den axialen Zug der Schraube 16, die in den Keil 48 eingeschraubt ist. Der Kanal 46 grenzt axial an die Durchgangsöffnung 15 an und hat einen größeren Querschnitt als diese. Der Kanal 46 kann nach oben hin trichterförmig enger werdend ausgebildet sein korrespondierend zur Form des Keils 48.

Durch die verschieden weiten Bereiche 37 und 39 zwischen den Zinken 22 können in dem Ausschnitt 20 im Durchmesser verschieden große Tretlagerachsen 24 oder Kurbelaugen 30 oder Tretlagergehäuse 28 aufgenommen werden.

Entlang der beiden Seitenränder des vertikalen Schenkels 18 ist auf seiner Außenseite je eine sich über seine gesamte Höhe erstreckende, mit ihm einstückige Verstärkungsrippe 50 bzw. 51 gebildet. Der horizontale Schenkel 14 ist auf seiner Unterseite entlag seines Außenrandes und auch dazwischen, insbesondere nahe bei dem Rohrstutzen 44, mit Verstärkungsrippen 52,53,54 und 55 versehen. Die beiden Schenkel 14 und 18 sind außerdem durch sie überbrückende Stege 56 und 57 oder Rippen auf beiden Seiten verstärkt und gegeneinander abgestützt.

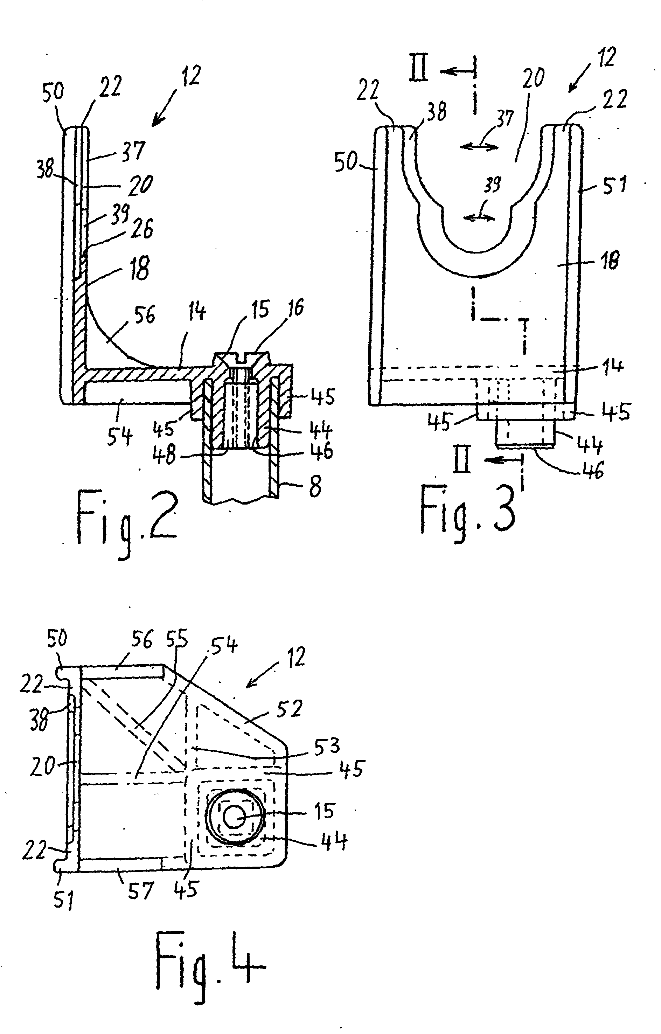

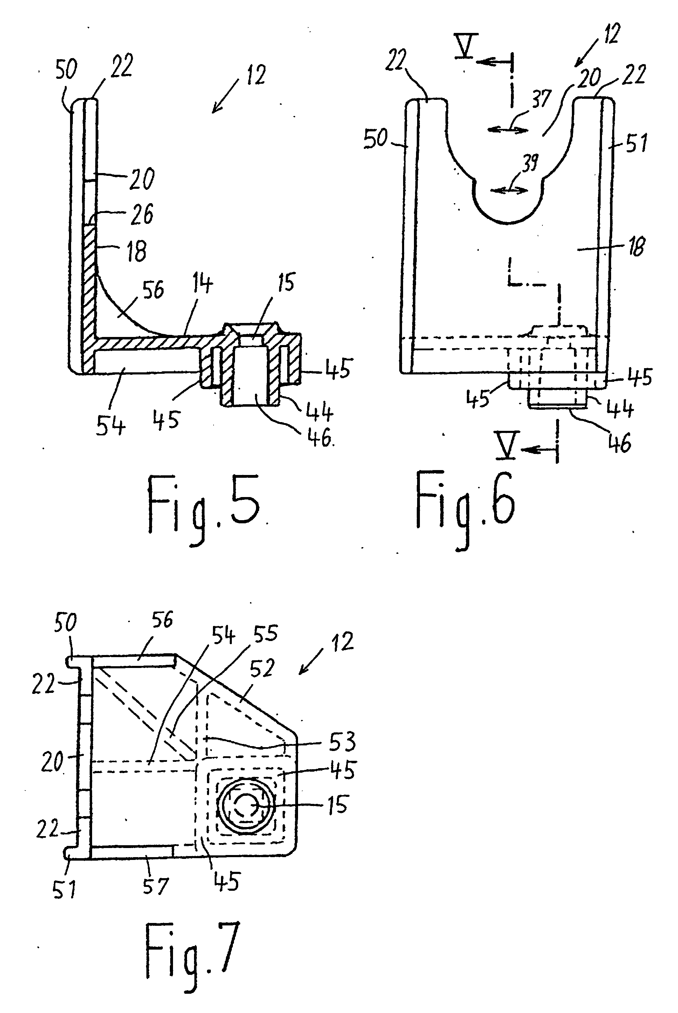

Die Ausführungsform nach den Figuren 5, 6 und 7 ist identisch mit der Ausführungsform der Figuren 2, 3 und 4, mit der Ausnahme, daß sie keinen vertieften Schenkelbereich 38 zur Verdünnung der Zinken 22 und des Gabel-Grundes 26 entlang ihrer inneren Randbereiche hat.

Wenn der axiale Abstand zwischen dem Tretlagergehäuse 28 und dem Kurbelauge 30 wesentlich größer ist als die Dicke der Zinken 22 und der Gabel-Grund 26, dann kann in diesen Abstand ein Distanzstück zusätzlich eingesetzt werden, z.B. ein axial federndes Element, damit das Fahrrad auf dem Adapter 12 senkrecht steht.

## Patentansprüche

1. Fahrradstützvorrichtung eines Fahrradständers zur Präsentation von Fahrrädern, mit einem Adapter (12), zur Abstützung des Fahrrades, der einen nach oben offenen Aussschnitt (20) zwischen zwei nach oben ragenden gabelartigen Zinken (22) und einen Stützenanschlußteil (15,44) zum Anschließen an ein Stützenelement (8) aufweist, **dadurch gekennzeichnet, daß** der Adapter (12) aus einem einstückigen Materialkörper aus mit Fasern verstärktem Kunststoff besteht, daß der Ausschnitt (20) zwischen den Zinken (22) einen weiten oberen Bereich (37) und einen relativ dazu engeren unteren Bereich (39) aufweist, die je nach unten hin halbkreisförmig enger werden, wobei der engere untere Bereich zum Aufnehmen und Abstützen einer Tretlagerachse (24) ausgebildet ist, und dass ein seitlicher Rand des oberen weiteren Bereiches (37) derart ausgebildet ist, dass ein Kurbelauge einer Tretkurbel des Fahrrades auf dem seitlichen Rand aufsetzbar ist, wenn der Zwischenraum zwischen dem Kurbelauge (30) und einem Tretlagergehäuse (28) kleiner ist als die Dicke der Gabelzinken (22).

2. Fahrradstützvorrichtung nach Anspruch 1, **dadurch gekennzeichnet, daß** der einstückige Materialkörper plattenförmig dünne Abschnitte (14,18) und davon vorstehende Versteifungsrippen (50-57) bildet.

3. Fahrradstützvorrichtung nach Anspruch 1 oder 2, **dadurch gekennzeichnet, daß** der einstückige Materialkörper winkelförmig ist und einen nach oben ragenden Winkelschenkel (18) mit den Gabelzinken (22) und einen quer dazu sich erstreckenden Winkelschenkel (14) hat, welcher das Stützanschlußteil (15,44) bildet.

4. Fahrradstützvorrichtung nach Anspruch 3, **dadurch gekennzeichnet, daß** mindestens einer der beiden Winkelschenkel (14,18) plattenförmig dünn ist und von ihm vorstehende, mit ihm einstückig gebildete Verstärkungsrippen (50-57) aufweist.

5. Fahrradstützvorrichtung nach einem der vorhergehenden Ansprüche, **dadurch gekennzeichnet, daß** der Stützenanschlußteil (15,44) einen Steckverbindungsteil (44) bildet, welcher mit dem Stützelement (8) zusammensteckbar ist.

6. Fahrradstützvorrichtung nach Anspruch 5, **dadurch gekennzeichnet, daß** der Steckverbindungsteil (44) einen rohrartigen Vorsprung als ein Steckverbindungselement aufweist.

7. Fahrradstützvorrichtung nach einem der vorhergehenden Ansprüche, **dadurch gekennzeichnet, daß** der Stützenanschlußteil (15,44) eine Durchgangsöffnung (15) für ein Befestigungselement (16) zur Befestigung des Adapters (12) an dem Stützenelement (8) aufweist.

8. Fahrradstützvorrichtung nach einem der vorhergehenden Ansprüche; **dadurch gekennzeichnet, daß** die Gabelzinken (22) und der sie verbindende Gabelgrund durch einen vertieften Bereich (38) auf ihrer äußeren Stirnseite entlang ihres inneren Randbereiches eine kleinere Dicke haben als der randferne Bereich der Zinken und des Gabelgrundes, so daß ein Tretkurbelauge in den vertieften Bereich (38) hineinragen kann und der verdünnte Randbereich durch einen engen Zwischenraum zwischen dem Tretlagerauge und einem Tretlagergehäuse auf eine Tretlagerachse aufsetzbar ist.

9. Fahrradstützvorrichtung nach einem der vorhergehenden Ansprüche, **dadurch gekennzeichnet, daß** der einstückige Materialkörper aus mit Glasfasern verstärktem Polyamid besteht.

10. Fahrradstützvorrichtung nach einem der vorhergehenden Ansprüche, **dadurch gekennzeichnet, daß** das Stützelement (8) ein oberer Teile einer durch mindestens eine Feder auseinandergespannten Teleskopstütze (6) ist, die durch das Gewicht eines auf den Adapter (12) gestellten Fahrrades entgegen der Federkraft zusammenschiebbar ist.

11. Fahrradständer enthaltend eine Fahrradstützvorrichtung nach einem der Ansprüche 1 bis 10.

## Claims

1. Bicycle support apparatus of a bicycle stand for the presentation of bicycles, comprising an adapter (12) for supporting the bicycle, which adapter comprises an upwardly open notch (20) between two upwardly projecting fork-like arms (22) as well as a support connection part (15, 44) for connection to a support element (8), **characterised in that** the adapter (12) consists of an integral material body made of fibre-reinforced plastics material, that the notch (20) between the arms (22) has a wide upper region (37) and an, in comparison thereto, narrower lower region (39), which each become narrower in a semicircular manner in a downward direction, wherein the narrower lower region is designed to receive and support a bottom bracket bearing axle (24), and that a lateral edge of the upper wider region (37) is designed in such a way that a crank eye of a crank of the bicycle is mountable on the lateral edge when the gap between the crank eye (30) and a bottom bracket bearing housing (28) is smaller than the thickness of the fork arms (22).

2. Bicycle support apparatus according to claim 1, **characterised in that** the integral material body forms portions (14, 18), which are thin in a plate-like manner, and reinforcing ribs (50-57) projecting therefrom.

3. Bicycle supporting apparatus according to claim 1 or 2, **characterised in that** the integral material body is angular and forms an upwardly projecting angle limb (18) having the fork arms (22) as well as an angle limb (14), which extends at right angles thereto and forms the support connection part (15, 44).

4. Bicycle support apparatus according to claim 3, **characterised in that** at least one of the two angle limbs (14, 18) is thin in a plate-shaped manner and has reinforcing ribs (50-57) formed integrally therewith and projecting therefrom.

5. Bicycle support apparatus according to any one of the preceding claims, **characterised in that** the support connection part (15, 44) forms a plug-in connection part, which is intermateable with the support element (8).

6. Bicycle support apparatus according to claim 5, **characterised in that** the plug-in connection part (44) comprises a tubular projection as a plug-in connection element.

7. Bicycle support apparatus according to any one of the preceding claims, **characterised in that** the support connection part (15, 44) comprises a through-opening (15) for a fastening element (16) for fastening the adapter (12) to the support element (8).

8. Bicycle support apparatus according to any one of the preceding claims, **characterised in that** the fork arms (22) and the fork base, which connects the latter, by virtue of a recessed region (38) at their outer end face have a smaller thickness along their inner edge region than the edge-remote region of the arms and the fork base so that a crank eye may project into the recessed region (38) and the thinned edge region is mountable through a narrow gap between the bottom bracket bearing eye and a bottom bracket bearing housing onto a bottom bracket bearing axle.

9. Bicycle support apparatus according to any one of the preceding claims, **characterised in that** the integral material body is made of glass-fibre-reinforced polyamide.

10. Bicycle support apparatus according to any one of the preceding claims, **characterised in that** the support element (8) is an upper part of a telescopic support (6), which is braced apart by means of at least one spring and is compressible counter to the spring action by the weight of a bicycle placed onto the adapter (12).

11. Bicycle stand comprising a bicycle support apparatus according to any one of claims 1 to 10.

## Revendications

1. Support-présentoir pour bicyclettes pour présenter des bicyclettes, doté d'un adaptateur (12) pour soutenir la bicyclette et présentant une encoche (20), ouverte vers le haut entre deux pointes (22) s'étendant vers le haut comme une fourche, et une pièce de raccord de support (15, 44) pour se raccorder à un élément support (8), **caractérisé en ce que** l'adaptateur (12) est constitué d'un corps de matériau en une seule pièce en plastique renforcé par fibres, **en ce que** l'encoche (20) présente entre les pointes (22) une partie supérieure (27) large et une partie inférieure (39) relativement plus étroite qui se rétrécissent en forme de demi-cercle vers le bas, la partie inférieure plus étroite étant formée pour loger et soutenir un axe de pédalier (24), et **en ce qu'**un bord latéral de la partie supérieure (37) plus large est formé de telle sorte qu'un oeilleton de manivelle du pédalier de la bicyclette peut être posé sur le bord latéral lorsque l'espace intermédiaire entre l'oeilleton de manivelle (30) et un boîtier de pédalier (28) est inférieur à l'épaisseur des pointes de la fourche (22).

2. Support-présentoir pour bicyclettes selon la revendication 1, **caractérisé en ce que** le corps de matériau en une seule pièce forme des sections (14, 18) minces en forme de plaque et des nervures raidisseuses qui en dépassent (50-57).

3. Support-présentoir pour bicyclettes selon la revendication 1 ou 2, **caractérisé en ce que** le corps de matériau en une seule pièce est angulaire et possède une aile (18) avec les pointes des fourches (22), s'étendant vers le haut, et une aile (14) qui y est transversale, laquelle forme la pièce de raccord de support (15, 44).

4. Support-présentoir pour bicyclettes selon la revendication 3, **caractérisé en ce qu'**au moins l'une des deux ailes (14, 18) est mince en forme de plaque et présente des nervures raidisseuses (50-57) formées en une seule pièce avec elle.

5. Support-présentoir pour bicyclettes selon l'une des revendications précédentes, **caractérisé en ce que** la pièce de raccord de support (15, 44) forme une pièce de raccordement (44), laquelle peut être insérée dans l'élément support (8).

6. Support-présentoir pour bicyclettes selon la revendication 5, **caractérisé en ce que** la pièce de raccordement (44) présente une avancée en forme de tube comme élément de raccord insérable.

7. Support-présentoir pour bicyclettes selon l'une des revendications précédentes, **caractérisé en ce que** la pièce de raccord de support (15, 44) présente un orifice de passage (15) pour un élément de fixation (16) en vue de fixer l'adaptateur (12) sur l'élément support (8).

8. Support-présentoir pour bicyclettes selon l'une des revendications précédentes, **caractérisé en ce que** les pointes de la fourche (22) et la base de la fourche, qui relie celles-ci par une partie (38) évidée sur leur côté frontal extérieur le long de leur partie intérieure du bord, ont une épaisseur inférieure à la partie éloignée du bord des fourches et de la base de la fourche, de sorte qu'un oeilleton de manivelle du pédalier peut s'étendre dans la partie évidée (38) et que la partie amincie du bord dans un espace intérieur étroit entre l'oeilleton du pédalier et un boîtier de pédalier peut être posée sur un axe de pédalier.

9. Support-présentoir pour bicyclettes selon l'une des revendications précédentes, **caractérisé en ce que** le corps de matériau en une seule pièce est composé de polyamide renforcé de fibres de verre.

10. Support-présentoir pour bicyclettes selon l'une des revendications précédentes, **caractérisé en ce que** l'élément support (8) est une pièce supérieure d'un appui télescopique (6) détendu à l'aide d'au moins un ressort, lequel appui peut coulisser contre la tension du ressort par le poids d'une bicyclette posée sur l'adaptateur (12).

11. Support pour bicyclettes comprenant un présentoir, selon l'une des revendications 1 à 10.
